# EUROPEAN PATENT APPLICATION

(11) **EP 4 611 339 A1**
(43) Date of publication of application: **03.09.2025**
(21) Application number: 25155096.8
(22) Date of filing: 30.01.2025
(51) Int. Cl.: H04L 45/02, H04L 45/00, H04L 45/745

(54) **PACKET ROUTING IN DISAGGREGATED SCHEDULED FABRICS**

(30) Priority: 27.02.2024 US 202463558563 P; 12.07.2024 US 202418771957
(71) Applicant: Cisco Technology, Inc., San Jose, CA 95134-1706 (US)
(72) Inventor: SINGH, Tapraj, San Ramon, CA (US); TAPASKAR, Vijay Krishnaji, Palo Alto, CA (US); BHAGWATULA, Praveen, Cary, NC (US); GARIGIPATI, Venkat, Milpitas, CA (US)
(74) Representative: Mathys & Squire

(57) **Abstract**

Devices, networks, systems, methods, and processes for packet forwarding and routing are described herein. A leaf switch can be in communication with a host device. The leaf switch may configure a subnet comprising the host device. The leaf switch can assign a next hop interface as a system port of the leaf switch and generate subnet information indicative of the assignment. The leaf switch may distribute the subnet information to one or more network devices through one or more internal Border Gateway Protocol sessions. A data packet destined to the host device can be transmitted to the system port of the leaf switch when a host Media Access Control (MAC) address of the host device is not resolved. The leaf switch can resolve the host MAC address and transmit the data packet to the host device based on the host MAC address.

## Description

The present disclosure relates to communication networks. More particularly, the present disclosure relates to packet routing and switching among multiple network devices.

### BACKGROUND

Networks include a large number of network devices such as spine switches, leaf switches, routers, gateways etc. The spine and leaf switches may be interconnected in a leaf-spine topology to provide multiple roues for forwarding or routing data traffic in the network between endpoints. The spine switches may interconnect the leaf switches to form a backbone of the network. The leaf switches can function as an access layer that connects to host devices. The leaf switches may serve as entry and exit points for traffic originating from or destined to the host devices. When the host devices are connected to different leaf switches, a path between the host devices may include multiple hops. The leaf-spine fabric can provide a scalable and efficient architecture for routing large data flows and traffic within a data center network.

In some conventional networks, when a host device on a local network sends a data packet destined for a remote host device on another network, a packet forwarding decision can be made based on a Media Access Control (MAC) address of the remote host device. If the remote host device is silent or when the MAC address of the remote host device has not been resolved, the packet forwarding may fail. This packet forwarding failure occurs as the leaf switch cannot determine an egress interface or a next hop interface for the data packet destined to the remote host device for which the MAC address is not resolved. As a result, the data packet may be dropped, thereby causing loss of data.

In some more conventional networks, unknown unicast flooding can occur when data traffic is destined to MAC addresses that are not learned on the leaf switch. The unknown unicast flooding may occur in situations such as, when the MAC addresses are not learned on the leaf switch, or when the data traffic is received after a duration greater than a timeout interval for the MAC addresses, etc. Forwarding the data traffic in unknown unicast flooding may lower a network performance of the network, or may even cause loss of network connectivity.

Therefore, there exists a need for a network that can provide efficient packet routing and/or forwarding without causing loss of data or unknown unicast flooding.

### SUMMARY OF THE DISCLOSURE

Aspects of the invention are set out in the independent claims and preferred features are set out in the dependent claims. Features of one aspect may be applied to each aspect alone or in combination with other features.

Systems and methods for providing routing of one or more data packets in a leaf-spine fabric in accordance with embodiments of the disclosure are described herein. In some embodiments, a device includes a processor, a memory communicatively coupled to the processor, and a packet routing logic, configured to determine a host Internet Protocol (IP) address associated with a host device, establish a communication session with one or more network devices, generate a first update message based on the host IP address, and transmit the first update message to the one or more network devices.

In some embodiments, generating the first update message includes assigning a system port as a next hop interface associated with the host IP address, and generating, based on assignment of the system port, the first update message indicative of the next hop interface.

In some embodiments, the system port is an in-band system port in communication with the one or more network devices through a disaggregated scheduled fabric.

In some embodiments, the packet routing logic is further configured to receive, through the system port, a data packet associated with the host device, resolve a host Media Access Control (MAC) address associated with the host device, and transmit the data packet to the host device based on the host MAC address.

In some embodiments, resolving the host MAC address includes transmitting an Address Resolution Protocol (ARP) request to the host device, and receiving, from the host device, an ARP response indicative of the host MAC address.

In some embodiments, the packet routing logic is further configured to generate a second update message based on the host MAC address, and transmit the second update message to the one or more network devices.

In some embodiments, the packet routing logic is further configured to configure a subnet including the host device, and assign a subnet IP address to the subnet.

In some embodiments, the communication session is an internal Border Gateway Protocol (iBGP) session and the first update message and the second update message are iBGP update messages.

In some embodiments, the first update message is an Ethernet Virtual Private Network (EVPN) Route Type 5 message indicative of one or more of the subnet IP address or the host IP address.

In some embodiments, the second update message is an EVPN Route Type 2 message indicative of one or more of the host MAC address or the host IP address.

In some embodiments, the packet routing logic is further configured to store at least one routing or forwarding table in the memory, and update the at least one routing or forwarding table based on one or more of the host IP address, the host MAC address, the subnet IP address, or the system port.

In some embodiments, a packet routing logic is configured to receive a first update message from a network device, determine, based on the first update message, a next hop interface and an Internet Protocol (IP) address associated with a host device, receive a data packet associated with the host device, identify an in-band system port of the network device indicated by the next hop interface, and transmit the data packet to the in-band system port of the network device.

In some embodiments, the IP address is indicative of one or more of a host IP address associated with the host device, or a subnet IP address associated with a subnet including the host device.

In some embodiments, the packet routing logic is further configured to receive a second update message from the network device, and determine, based on the second update message, a host Media Access Control (MAC) address associated with the host device.

In some embodiments, the first update message is an Ethernet Virtual Private Network (EVPN) Route Type 5 message indicative of one or more of the subnet IP address or the host IP address.

In some embodiments, the second update message is an EVPN Route Type 2 message indicative of one or more of the host MAC address or the host IP address.

In some embodiments, the packet routing logic is further configured to store at least one routing or forwarding table in the memory, and update the at least one routing or forwarding table based on one or more of the host IP address, the host MAC address, the subnet IP address, or the in-band system port.

In some embodiments, a method includes determining a host Internet Protocol (IP) address associated with a host device, assigning an in-band system port as a next hop interface associated with the host IP address, generating a first update message indicative of the host IP address and the next hop interface, and transmitting the first update message to one or more network devices.

In some embodiments, a method includes receiving, through the in-band system port, a data packet associated with the host device from the one or more network devices, transmitting an Address Resolution Protocol (ARP) request to the host device, receiving, from the host device, an ARP response indicative of a host Media Access Control (MAC) address, and transmitting the data packet to the host device based on the host MAC address.

In some embodiments, a method includes generating a second update message indicative of the host MAC address and the host IP address, and transmitting the second update message to the one or more network devices.

Corresponding methods and apparatus are also described herein including network nodes, computer programs, computer program products, computer readable media and logic encoded on tangible media for implementing the systems are also described.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a conceptual illustration of a network illustrating distribution of a subnet, in accordance with various embodiments of the disclosure;
FIG. 2 is a conceptual illustration of a network illustrating a packet flow, in accordance with various embodiments of the disclosure;
FIG. 3 is a conceptual illustration of a network illustrating a packet flow, in accordance with various embodiments of the disclosure;
FIG. 4 is a conceptual illustration of a network for transmitting a data packet to a remote host device, in accordance with various embodiments of the disclosure;
FIG. 5 is a schematic block diagram of an example architecture for a network fabric, in accordance with various embodiments of the disclosure;
FIG. 6 is a flowchart depicting a process for distributing a next hop interface associated with a device, in accordance with various embodiments of the disclosure;
FIG. 7 is a flowchart depicting a process for distributing subnet information, in accordance with various embodiments of the disclosure;
FIG. 8 is a flowchart depicting a process for routing a data packet, in accordance with various embodiments of the disclosure; and
FIG. 9 is a conceptual block diagram of a device suitable for configuration with a packet routing logic, in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the issues described above, devices and methods are discussed herein that provide packet routing and switching among multiple network devices in a Disaggregated Scheduled Fabric (DSF). In many embodiments, the DSF may include numerous network devices such as but not limited to spine switches or leaf switches, for example. A plurality of spine and leaf switches can be connected in a leaf-spine topology, *i.e.,* leaf-spine fabric. The leaf switches may include Top-Of-Rack (TOR) switches or End of Row (EOR) switches etc., for example. Multiple TOR switches and one or more spine switches can be connected in a mesh topology. The TOR switches may be deployed at an edge of a network, near servers, storage arrays, and other network devices such as but not limited to application servers or virtual machines etc. for example. The TOR switches can be connected one or more host devices directly or indirectly. The TOR switches may also facilitate Virtual Local Area Network (VLAN) tagging, routing protocols, access control lists, or Quality of Service (QoS) etc., for example.

In a number of embodiments, a first leaf switch may be in communication with a host device. The first leaf switch can be directly or indirectly connected to the host device by way of one or more types of routes, such as but not limited to static routes, dynamic routes, or directly connected routes, etc. for example. In the directly connected routes, the host device can be in a subnet directly connected to an active interface of the first leaf switch. The directly connected routes may be automatically detected and recorded by the first leaf switch when the first leaf switch is configured and/or is operational. In static routes, a route for the host device may be configured in the first leaf switch by an operator. In numerous embodiments, for example, the operator may configure, on the first leaf switch, a static route for the host device such that data traffic destined for the host device may be forwarded through a specific next hop network device, such as but not limited to a router, for example. In dynamic routes, the first leaf switch can utilize one or more routing protocols to determine the route for the host device. Examples of the routing protocols may include, but are not limited to, Open Shortest Path First (OSPF), Border Gateway Protocol (BGP), or Routing Information Protocol (RIP) etc.

In various embodiments, the first leaf switch may store at least one routing or forwarding table in a memory. In some embodiments, for example, the first leaf switch can store a routing table that may store route information for the network devices and the host devices. In certain embodiments, for example, the first leaf switch can store a forwarding table that can store port information of connected network devices and host devices. In some more embodiments, for example, the first leaf switch can facilitate multiple routing or forwarding tables by way of Virtual Routing and Forwarding (VRF). In more embodiments, for example, the first leaf switch may store a route database in the memory. The route database can store the routes, the ports, or other routing and/or forwarding information associated with the network devices and host devices. The first leaf switch can determine the route for the host device and update the routing or forwarding table to store the route information.

In additional embodiments, a Media Access Control (MAC) address of the host device may not be resolved. In that, the routing or forwarding table of the first leaf switch may not include the MAC address for the host device. In such cases, in some embodiments, the first leaf switch may assign a system port for receiving one or more data packets associated with the host device. In certain embodiments, the system port may be an in-band system port or an out-of-band port. In more embodiments, examples of the system port may include but are not limited to management ports or front panel ports etc. In some more embodiments, for example, the system port can be utilized to configure or manage the first leaf switch or establish in-band communication with one or more network devices etc. In many more embodiments, for example, the system port may function as a management interface of the first leaf switch and/or a device interface of the first leaf switch, *i.e.,* the system port may be utilized for user data traffic. In still further embodiments, for example, the system port can correspond to an in-band interface. The in-band interface may process one or more management packets as well as one or more data-forwarding packets. In still many embodiments, for example, the system port may correspond to an out-of-band interface. The out-of-band interface may process or forward management protocol traffic. In numerous embodiments, for example, the interfaces can also implement one or more dynamic routing protocols such as but not limited to OSPF, BGP, RIP, distance vector routing protocols, or link state protocols, etc. In additional embodiments, the interfaces may also allow one or more peer-filtering policies. The peer-filtering policies may advertise one or more routes to peers or peer groups, or may also receive the one or more routes from the peers or peer groups. The peer-filtering policies can also control or filter the advertisements of the routes. Examples of the peers or peer groups can include the network devices in a network.

In further embodiments, for example, the first leaf switch may implement a supervisor module to classify an incoming traffic into two functional components, such as but not limited to, data plane and control plane. The data plane may receive data traffic including one or more data packets, process the data packets or forward the data packets to the one or more network devices etc., for example. The control plane can implement the dynamic routing protocols or transmit control packets between the one or more network devices etc., for example. In some embodiments, examples of the control packets may include but are not limited to receive packets, exception packets, redirect packets, or glean packets etc. In many embodiments, examples of the receive packets may include but are not limited to router update messages, keepalive messages, multicast packets, or packets that include destination IP and MAC addresses etc. In still many embodiments, examples of the exception packets may include but are not limited to packets that may include a destination address that is not matched in a Forwarding Information Base (FIB) etc. In many more embodiments, examples of the redirect packets may include but are not limited to the packets that are redirected to the supervisor module based on Dynamic Host Configuration Protocol (DHCP) snooping or dynamic Address Resolution Protocol (ARP) inspection. In still further embodiments, examples of the glean packets may include but are not limited to the packets where the FIB does not include the destination MAC address and wherein an ARP request can be transmitted to the host device. In numerous embodiments, for example, the control packets may be received and processed by a processor or a controller of the first leaf switch.

In still many embodiments, the first leaf switch can determine a host IP address associated with the host device. The first leaf switch may determine a host route associated with the host IP address. In some embodiments, for example, the host route may be indicative of the host IP address or an IP prefix associated with the host IP address etc. The first leaf switch can assign the system port as a next hop interface for the host route. In certain embodiments, for example, the first leaf switch may assign the next hop interface based on one or more routing or forwarding policies implemented by the first leaf switch. In more embodiments, for example, the next hop interface may be the system port connected to the network devices in a BGP or internal BGP (iBGP) session. The first leaf switch can advertise, to the network devices, the system port as the next hop interface for the host route associated with the host device. In some more embodiments, the first leaf switch may configure a subnet comprising the host device. The first leaf switch can assign a subnet IP address to the subnet. The first leaf switch may advertise the subnet to the network devices. The first leaf switch can transmit a first update message to the network devices. The first update message may be indicative of one or more of: the configuration of the subnet, the host IP address, the IP prefixes associated with the host route, or the subnet IP address etc. for example. In numerous embodiments, the first leaf switch may transmit the first update message to the network devices in one or more iBGP sessions. In many more embodiments, for example, the first update message can be an iBGP update message. In still many embodiments, for example, the first leaf switch may transmit the first update message based on one or more of: IP version 4 (IPv4) address family, IP version 6 (IPv6) address family, or Ethernet Virtual Private Network (EVPN) address family etc. In still further embodiments, the first update message can be an EVPN Route Type 5 message. The EVPN Route Type 5 message can facilitate IP prefix advertisements, floating IP addresses, external IP prefix advertisements, or can withdraw previously advertised IP prefixes etc. for example. The EVPN Route Type 5 message may be transmitted without the host MAC address associated with the host device. The network devices can receive the first update message and can install one or more routes corresponding to the host device in the routing or forwarding tables, and/or install the subnet comprising the host device in the routing or forwarding tables.

In still further embodiments, the first leaf switch can be in communication with a second leaf switch. The second leaf switch may receive a data packet associated with the host device connected to the first leaf switch. In that, in some embodiments, the data packet can include the host IP address as the destination IP address, based on which the second leaf switch may determine that the data packet is associated with the host device. The second leaf switch can check the one or more routing or forwarding tables stored in a memory of the second leaf switch to determine a destination MAC address. If the MAC address of the host device is not resolved, the routing or forwarding tables of the second leaf switch may not include the MAC address of the host device. In that case, in certain embodiments, the second leaf switch can determine the next hop interface. The second network device may identify the system port of the first leaf switch indicated by the next hop interface. In more embodiments, for example, the system port indicated by the next hop interface may be system port utilized by the iBGP session between the first leaf switch and the second leaf switch or an in-band communication session between the first leaf switch and the second leaf switch. The second leaf switch can transmit the data packet to the system port of the first leaf switch.

In numerous embodiments, the first leaf switch may receive the data packet and check the routing or forwarding tables stored in a memory of the first leaf switch to determine the host MAC address. If the host MAC address is not resolved, the first leaf switch can resolve the host MAC address by utilizing ARP. In that, the first leaf switch may transmit an ARP request to the host device. The ARP request may be indicative of requesting the host MAC address of the host device. The host device can transmit an ARP response to the first leaf switch. The ARP response may be indicative of the host MAC address of the host device. The first leaf switch can update the routing or forwarding tables to store the host MAC address. The first leaf switch may also advertise the host MAC address to the network devices. In that, the first leaf switch can generate a second update message. The second update message may be indicative of the host IP address and the host MAC address. In certain embodiments, for example, the first update message and the second update message can be BGP messages or iBGP messages. In that, in certain embodiments, for example, the BGP messages or iBGP messages may include BGP update messages or iBGP update messages. In more embodiments, for example, the second update message can be an EVPN Route Type 2 message. The first leaf switch may transmit the second update message based on one or more of: IPv4 address family, IPv6 address family, or EVPN address family etc. The network devices can receive the first and second update messages and update the corresponding routing or forwarding tables based on one or more of: the host IP address, the host MAC address, the subnet IP address, or the system port.

In many embodiments, in operation, the packet routing technique of the present disclosure can facilitate installation of remote subnets with the next hop interface as the system port of a leaf switch connected to the remote subnet. The leaf switch can distribute subnet information including one or more of: a subnet route, a subnet IP address, or a subnet IP prefix etc. by utilizing iBGP. The data packet destined to the host device associated with the remote subnet can be transmitted to the system port of the leaf switch when the host MAC address of the host device is not resolved. The leaf switch can then resolve the host MAC address and can transmit the data packet to the host device based on the host MAC address. The leaf switch can also distribute the host MAC address by utilizing iBGP.

Advantageously, the packet routing technique of the present disclosure can prevent loss of data packets or data traffic when the host MAC address is unresolved. The packet routing technique may also provide the transmission of the data packets to the next hop interfaces within the leaf-spine fabric until the host MAC address is resolved. The packet routing technique of the present disclosure may be especially useful in transmitting the data traffic destined for the remote hosts, silent hosts, and/or remote subnets by properly routing such data traffic within the leaf-spine fabric to avoid loss of the data traffic. The packet routing technique of the present disclosure can also provide resolution and advertisement of the host MAC addresses for the remote hosts, silent hosts, and/or remote subnets without causing packet drop or unknown unicast flooding.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

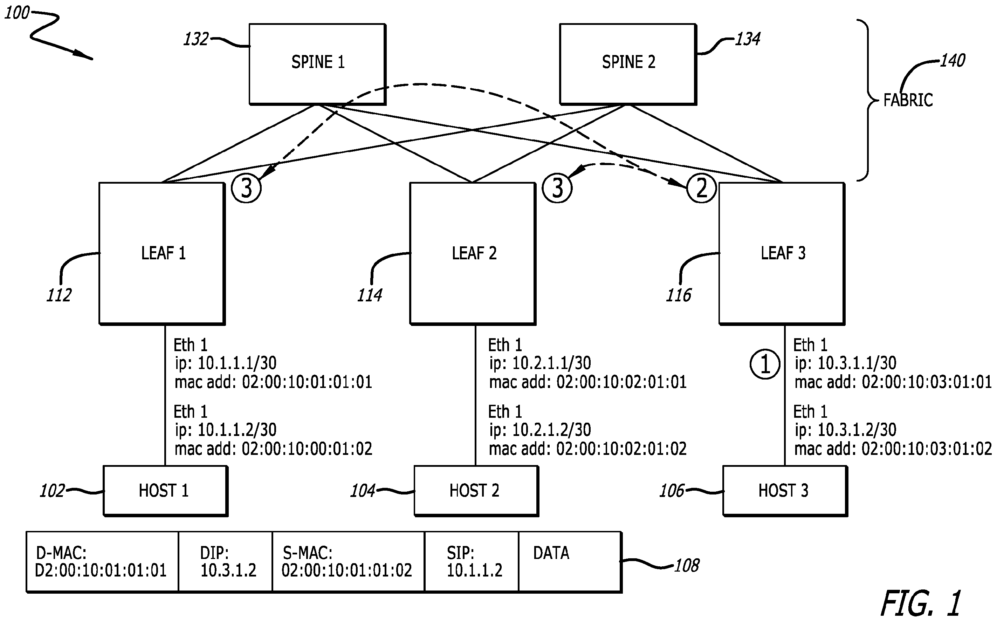

Referring to FIG. 1, a conceptual illustration of a network 100 illustrating distribution of a subnet, in accordance with various embodiments of the disclosure is shown. In many embodiments, the network 100 may comprise first through third host devices 102-106, and a plurality of network devices including first through third leaf switches 112-116 and first and second spine switches 132-134. In some embodiments, the first through third leaf switches 112-116 and the first and second spine switches 132-134 may be interconnected in a mesh topology to form a leaf-spine fabric 140. In certain embodiments, for example, the leaf-spine fabric 140 may be a Disaggregated Scheduled Fabric (DSF). In more embodiments, for example, the first through third leaf switches 112-116 and the first and second spine switches 132-134 may implement one or more open-source operating systems such as but not limited to Software for Open Networking in the Cloud (SONiC), for example. In more embodiments, the leaf-spine fabric 140 can implement a control plane in conjunction with a scheduled fabric data plane. In that, the leaf-spine fabric 140 may be deployed for multiple applications, such as but not limited to Equal Cost MultiPath (ECMP) routing, enhanced Ethernet with in-band telemetry, or scheduled fabric data planes etc. In some more embodiments, the leaf-spine fabric 140 can utilize Border Gateway Protocol (BGP) such as an internal BGP (iBGP) in a full mesh topology among a plurality of leaf switches including the first through third leaf switches 112-116 to re-distribute externally learnt prefixes for routing. The leaf-spine fabric 140 may facilitate system port representation for network-facing ports of the first through third leaf switches 112-116. The leaf-spine fabric 140 can also implement Virtual Output Queues (VOQs) associated with one or more system ports of the plurality of network devices.

In a number of embodiments, at Step 1, the third host device 106 can connect to the third leaf switch 116. In some embodiments, the third host device 106 may be a remote host device or a host device in a remote subnet. The third leaf switch 116 can determine a host Internet Protocol (IP) address associated with the third host device 106. In some embodiments, the third leaf switch 116 may determine a host route associated with the host IP address.

In various embodiments, at Step 2, the third leaf switch 116 may establish one or more iBGP sessions with the first leaf switch 112 and the second leaf switch 114 on a system port. The third leaf switch 116 can assign the system port as a next hop interface for the host route. In some embodiments, for example, the third leaf switch 116 may assign the next hop interface based on one or more routing or forwarding policies implemented by the third leaf switch 116. In more embodiments, for example, the next hop interface may be the system port connected to the first leaf switch 112 and the second leaf switch 114 in the iBGP sessions. The third leaf switch 116 can advertise, to the first leaf switch 112 and the second leaf switch 114, the system port as the next hop interface for the host route associated with the third host device 106. In some more embodiments, the third leaf switch 116 may configure the subnet comprising the third host device 106. The third leaf switch 116 can assign a subnet IP address to the subnet. The third leaf switch 116 may advertise the subnet to the first leaf switch 112 and the second leaf switch 114. In that, the third leaf switch 116 may distribute subnet information such as a subnet route or the subnet IP address to the first leaf switch 112 and the second leaf switch 114.

In additional embodiments, the third leaf switch 116 can generate an update message. In some embodiments, for example, the update message may be a BGP update message or an iBGP update message. In certain embodiments, for example, the update message can be an Ethernet Virtual Private Network (EVPN) update message. In that, the update message may be an EVPN Route Type 5 message. In more embodiments, for example, the third leaf switch 116 may transmit the update message based on one or more of: IP version 4 (IPv4) address family, IP version 6 (IPv6) address family, or Ethernet Virtual Private Network (EVPN) address family etc. In some more embodiments, the EVPN Route Type 5 message can facilitate IP prefix advertisements, floating IP addresses, external IP prefix advertisements, or can withdraw previously advertised IP prefixes etc. for example.

In additional embodiments, at Step 3, the first leaf switch 112 and the second leaf switch 114 may receive the update message. The first leaf switch 112 and the second leaf switch 114 can determine one or more of: the subnet, the subnet IP address, the host IP address, the host route, or the subnet route etc. based on the update message. The first leaf switch 112 and the second leaf switch 114 may store one or more routing or forwarding tables indicative of one or more routes, IP addresses, ports, Media Access Control (MAC) addresses or IP prefixes etc. In some embodiments, for example, the routing table may store route information of one or more network devices and host devices. In certain embodiments, for example, the forwarding table can store port information of the connected network devices and host devices. In more embodiments, for example, the first leaf switch 112 and the second leaf switch 114 can facilitate multiple routing or forwarding tables by way of Virtual Routing and Forwarding (VRF). The first leaf switch 112 and the second leaf switch 114 can install the subnet route and/or the host route corresponding to the third host device 106 in the corresponding one or more routing or forwarding tables based on the update message.

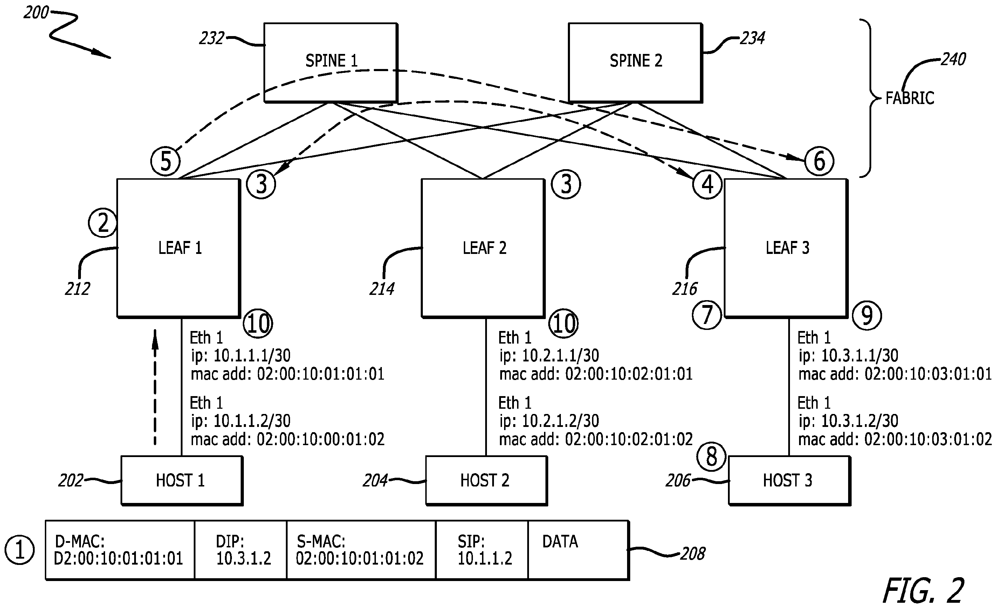

Although a specific embodiment for the network 100 for carrying out the various steps, processes, methods, and operations described herein is discussed with respect to FIG. 1, any of a variety of systems and/or processes may be utilized in accordance with embodiments of the disclosure. For example, one or more leaf switches can configure and distribute information for remote subnets, remote host devices, and/or silent host devices. The elements depicted in FIG. 1 may also be interchangeable with other elements of FIGS. 2 - 9 as required to realize a particularly desired embodiment.

Referring to FIG. 2, a conceptual illustration of a network 200 illustrating a packet flow, in accordance with various embodiments of the disclosure is shown. In many embodiments, the network 200 may comprise first through third host devices 202-206, and a plurality of network devices including first through third leaf switches 212-216 and first and second spine switches 232-234. In some embodiments, the first through third leaf switches 212-216 and the first and second spine switches 232-234 may be interconnected in the mesh topology to form a leaf-spine fabric 240. In certain embodiments, for example, the leaf-spine fabric 240 may be the DSF.

In many embodiments, at Step 1, the first leaf switch 212 may receive a data packet 208 from the first host device 202. The data packet 208 may include a destination MAC address, a destination IP address, a source MAC address, a source IP address, and data etc., for example. In some embodiments, for example, the first leaf switch 212 may be a default gateway for the first host device 202.

In a number of embodiments, at Step 2, the first leaf switch 212 may determine a MAC address associated with the first host device 202. The first leaf switch 212 can also determine the destination IP address or MAC address associated with the data packet 208. In certain embodiments, for example, the first leaf switch 212 may perform a lookup in a MAC address table, such as but not limited to an Ethernet MAC table or a Content Addressable Memory (CAM) table. The MAC address table can store information about multiple ports of the plurality of network devices to which the first leaf switch 212 may be connected. The MAC address table may include one or more static entries and/or one or more dynamic entries indicative of the ports of the plurality of network devices. In some embodiments, if a host MAC address associated with the third host device 206 is not resolved, the Ethernet MAC table check may fail. The first leaf switch 212 may perform Longest Prefix Match (LPM) check to select an entry from the one or more routing or forwarding tables based on the destination IP address. The LPM check may utilize a predetermined prefix length to mask one or more bits of the destination IP address. The LPM check can provide the entry from the routing or forwarding table that best matches the masked destination IP address. In some embodiments, for example, the LPM check can prefer a longest IP prefix or a most specific IP prefix that best matches with the destination IP address. Based on a result of the LPM check, the first leaf switch 212 can determine the system port of the third leaf switch 216 where the data packet 208 is to be routed.

In various embodiments, at Step 3, the first leaf switch 212 can map the data packet 208 or an encapsulated data packet to a Virtual Output Queue (VOQ) of one or more VOQs based on a type of the data packet 208 or one or more classifiers associated with the data packet 208. The first leaf switch 212 may classify the data packet 208 based on a protocol type, source and/or destination IP addresses, source and/or destination port numbers, or any other attributes defined by network policies etc. for example. In some embodiments, each VOQ may be associated with a specific system port or interface on the first leaf switch 212. The mapping of the data packet 208 to the VOQ can be based on one or more classification rules configured in a forwarding logic of the first leaf switch 212.

In additional embodiments, at Step 4, the first leaf switch 212 can transmit a grant request to the third leaf switch 216. The grant request may be indicative of requesting the third leaf switch 216 to provide credit to ensure that the Output Queues (OQs) of the third leaf switch 216 have sufficient buffer space to store the data packet 208. The credit mechanism can help in preventing congestion and ensuring that the third leaf switch 216 can handle traffic bursts without dropping packets.

In further embodiments, at Step 5, if sufficient credit is granted by the third leaf switch 216, the data packet 208 or the encapsulated data packet can be forwarded over the leaf-spine fabric 240 to the corresponding OQs of the third leaf switch 216. In that, upon receiving a grant response from the third leaf switch 216, the first leaf switch 212 can route the data packet 208 or the encapsulated data packet to the system port of the third leaf switch 216 through the leaf-spine fabric 240. In some embodiments, the transmission of the data packet 208 or the encapsulated data packet to the third leaf switch 216 may be performed by in-band communication.

In many more embodiments, at Step 6, the third leaf switch 216 can receive the data packet 208 or the encapsulated data packet. The third leaf switch 216 may implement a supervisor module to classify incoming traffic into two functional components, such as but not limited to, data plane and control plane. The data plane may receive data traffic including one or more data packets, process the data packets or forward the data packets to the one or more network devices etc., for example. The control plane can implement the dynamic routing protocols or transmit control packets between the plurality of network devices etc., for example. In some embodiments, examples of the control packets may include but are not limited to receive packets, exception packets, redirect packets, or glean packets etc. In many embodiments, examples of the receive packets may include but are not limited to router update messages, keepalive messages, multicast packets, or packets that include destination IP and MAC addresses etc. In still many embodiments, examples of the exception packets may include but are not limited to packets that may include a destination address that is not matched in a Forwarding Information Base (FIB) etc. In many more embodiments, examples of the redirect packets may include but are not limited to the packets that are redirected to the supervisor module based on Dynamic Host Configuration Protocol (DHCP) snooping or dynamic Address Resolution Protocol (ARP) inspection. In still further embodiments, examples of the glean packets may include but are not limited to the packets where the FIB does not include the destination MAC address and wherein an ARP request can be transmitted to the host device. In numerous embodiments, for example, the control packets may be received and processed by a processor or a controller of the third leaf switch 216. The third leaf switch 216 may determine the host IP address and the host MAC address associated with the data packet 208. If the host MAC address is not known, *i.e.,* unresolved, the third leaf switch 216 can initiate a MAC address resolution process for the third host device 206.

In many additional embodiments, at Step 7, the third leaf switch 216 may transmit an ARP request to the third host device 206. The ARP request may be indicative of requesting the host MAC address of the third host device 206. In many further embodiments, at Step 8, the third host device 206 can transmit an ARP response to the third leaf switch 216. The ARP response may be indicative of the host MAC address of the third host device 206.

In still many embodiments, at Step 9, the third leaf switch 216 can update the routing or forwarding tables to store the host MAC address. The third leaf switch 216 may also advertise the host MAC address to the first leaf switch 212 and the second leaf switch 214. In that, the third leaf switch 216 can generate an update message. The update message may be indicative of the host IP address and the host MAC address. In some embodiments, for example, the update message can be a BGP message or an iBGP message. In that, in certain embodiments, for example, the BGP message or the iBGP message may include a BGP update message or an iBGP update message. In certain embodiments, for example, the update message can be an EVPN Route Type 2 message. The third leaf switch 216 may transmit the update message based on one or more of: IPv4 address family, IPv6 address family, or EVPN address family etc. to the first leaf switch 212 and the second leaf switch 214.

In still further embodiments, the first leaf switch 212 and the second leaf switch 214 can receive the update message and determine, based on the update message, the host MAC address and the host IP address associated with the third host device 206. The first leaf switch 212 and the second leaf switch 214 may update the corresponding routing or forwarding tables to store the host IP address and/or the host MAC address. The third leaf switch 216 may transmit the data packet 208 to the third host device 206 based on the host MAC address.

Although a specific embodiment for the network 200 for carrying out the various steps, processes, methods, and operations described herein is discussed with respect to FIG. 2, any of a variety of systems and/or processes may be utilized in accordance with embodiments of the disclosure. For example, the host MAC address for the remote subnets, remote host devices, and/or silent host devices can be resolved without causing packet loss or unknown unicast flooding. The elements depicted in FIG. 2 may also be interchangeable with other elements of FIG. 1 and FIGS. 3 - 9 as required to realize a particularly desired embodiment.

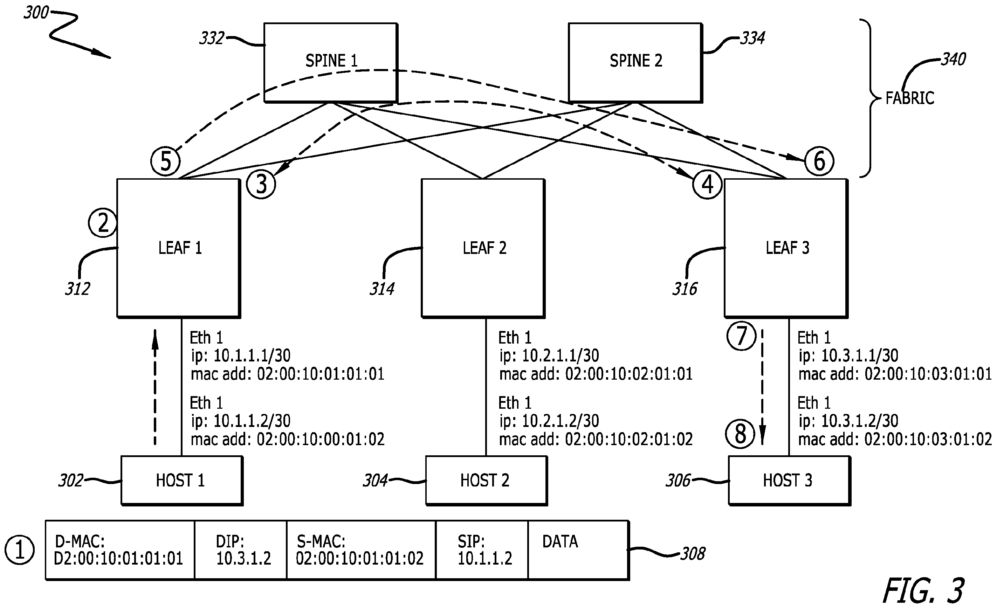

Referring to FIG. 3, a conceptual illustration of a network 300 illustrating a packet flow, in accordance with various embodiments of the disclosure is shown. In many embodiments, the network 300 may comprise first through third host devices 302-306, and a plurality of network devices including first through third leaf switches 312-316 and first and second spine switches 332-334. In some embodiments, the first through third leaf switches 312-316 and the first and second spine switches 332-334 may be interconnected in the mesh topology to form a leaf-spine fabric 340. In certain embodiments, for example, the leaf-spine fabric 340 may be the DSF.

In a number of embodiments, at Step 1, the first leaf switch 312 may receive a data packet 308 from the first host device 302. The data packet 308 may include the destination MAC address, the destination IP address, the source MAC address, the source IP address, and the data etc., for example. In some embodiments, for example, the first leaf switch 312 may be a default gateway for the first host device 302.

In various embodiments, at Step 2, the first leaf switch 312 may perform a lookup in the MAC address table, such as but not limited to the Ethernet MAC table or the CAM table. The first leaf switch 312 can determine the system port of the third leaf switch 316 where the data packet 308 is to be routed. The system port can be the in-band system port of the third leaf switch 316.

In additional embodiments, at Step 3, the first leaf switch 312 can map the data packet 308 to the VOQ based on the type of the data packet 308 or the one or more classifiers associated with the data packet 308. The first leaf switch 312 may classify the data packet 208 based on the protocol type, source and/or destination IP addresses, source and/or destination port numbers, or any other attributes defined by network policies etc. for example. In some embodiments, each VOQ may be associated with a specific system port or interface on the first leaf switch 312. The first leaf switch 312 can transmit the grant request to the third leaf switch 316. The grant request may be indicative of requesting the third leaf switch 316 to provide credit to ensure that the OQs of the third leaf switch 316 have sufficient buffer space to store the data packet 308.

In further embodiments, at Step 4, if sufficient credit is granted by the third leaf switch 316, the data packet 308 can be forwarded over the leaf-spine fabric 340 to the corresponding OQs of the third leaf switch 316. In that, upon receiving the grant response from the third leaf switch 316, the first leaf switch 312 can route the data packet 308 to the system port of the third leaf switch 316 through the leaf-spine fabric 340. In some embodiments, the transmission of the data packet 308 to the third leaf switch 316 may be performed by in-band communication.

In many more embodiments, at Steps 5 and 6, the first leaf switch 312 can encapsulate the data packet 308 to generate the encapsulated data packet. The encapsulated data packet can be transmitted with a packet context data. In some embodiments, for example, the packet context data may include metadata about the data packet 308, such as but no limited to information about an ingress port, an egress port, a VLAN tag, QoS parameters, and any other relevant information for routing or processing the data packet 308. The first leaf switch 312 can be connected to the one or more network devices through one or more fabric links. The first leaf switch 312 may implement one or more load balancing mechanisms such as but not limited to a weighted round-robin load balancing technique, for example. The first leaf switch 312 can distribute the encapsulated data packet and the corresponding packet context data across multiple fabric links. Each fabric link may be assigned a weight, which can determine a share of the traffic. Higher-weighted fabric links can receive more share of the traffic compared to lower-weighted fabric links. The round-robin technique may ensure that the traffic is evenly distributed among the fabric links. The first leaf switch 312 may maintain a table or a data structure to store the weights assigned to each fabric link, along with information about a current load on each fabric link.

In many embodiments, at Steps 7 and 8, the third leaf switch 316 can decapsulate the encapsulated data packet and transmit the data packet 308 to the third host device 306. The third leaf switch 316 may remove the packet context data from the encapsulated data packet. The third leaf switch 316 may further encapsulate the data packet with the destination address of the third host device 306. In some embodiments, the destination address can be the host MAC address associated with the third host device 306. In that, the third leaf switch 316 may add an Ethernet packet header indicative of the host MAC address of the third host device 306. The third host device 306 may receive the data packet 308 from the third leaf switch 316.

Although a specific embodiment for the network 300 for carrying out the various steps, processes, methods, and operations described herein is discussed with respect to FIG. 3, any of a variety of systems and/or processes may be utilized in accordance with embodiments of the disclosure. For example, after resolving the host MAC address of the third host device 306, the data packet 308 can be transmitted to the third host device 306 by the third leaf switch 316. The elements depicted in FIG. 3 may also be interchangeable with other elements of FIGS. 1 - 2 and FIGS. 4 - 9 as required to realize a particularly desired embodiment.

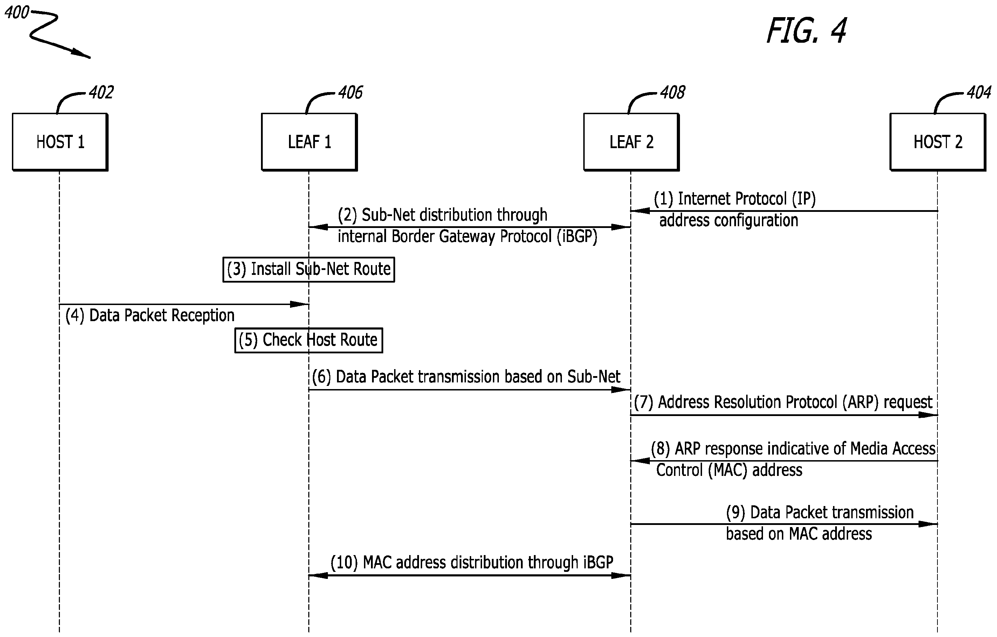

Referring to FIG. 4, a conceptual illustration of a network 400 for transmitting the data packet to the remote host device, in accordance with various embodiments of the disclosure is shown. In many embodiments, the network 400 may comprise a first host device 402 and a second host device 404. The network 400 can further include a first leaf switch 406 and a second leaf switch 408.

In a number of embodiments, at Step 1, the second leaf switch 408 can determine the host IP address associated with the second host device 404. The second leaf switch 408 may determine the host route associated with the host IP address. In some embodiments, for example, the host route may be indicative of the host IP address or the IP prefix associated with the host IP address etc. The second leaf switch 408 can assign the system port as the next hop interface for the host route. In certain embodiments, for example, the second leaf switch 408 may assign the next hop interface based on one or more routing or forwarding policies implemented by the second leaf switch 408. In more embodiments, for example, the next hop interface may be the system port connected to the first leaf switch 406 in the BGP or iBGP sessions.

In various embodiments, at Step 2, the second leaf switch 408 can advertise, to the first leaf switch 406, the system port as the next hop interface for the host route associated with the second host device 404. In some more embodiments, the second leaf switch 408 may configure the subnet comprising the host device. The second leaf switch 408 can assign the subnet IP address to the subnet. The second leaf switch 408 may advertise the subnet to the first leaf switch 406. The second leaf switch 408 can generate and transmit a first update message to the first leaf switch 406. The first update message may be indicative of one or more of: the configuration of the subnet, the host IP address, the IP prefixes associated with the host route, or the subnet IP address etc. for example. In numerous embodiments, the second leaf switch 408 may transmit the first update message to the first leaf switch 406 in one or more iBGP sessions. In many more embodiments, for example, the first update message can be the iBGP update message. In still many embodiments, for example, the first leaf switch may transmit the first update message based on one or more of: IPv4 address family, IPv6 address family, or EVPN address family etc. In still further embodiments, the first update message can be the EVPN Route Type 5 message. The EVPN Route Type 5 message can facilitate IP prefix advertisements, floating IP addresses, external IP prefix advertisements, or can withdraw previously advertised IP prefixes etc. for example. The EVPN Route Type 5 message may be transmitted without the host MAC address associated with the second host device 404.

In additional embodiments, at Step 3, the first leaf switch 406 can receive the first update message. The first leaf switch 406 can install one or more routes corresponding to the second host device 404 and/or the subnet comprising the second host device 404 in the corresponding routing or forwarding tables. The first leaf switch 406 may update the corresponding routing or forwarding tables based on the first update message.

In further embodiments, at Step 4, the first leaf switch 406 can receive the data packet from the first host device 402. The data packet may include the destination MAC address, the destination IP address, the source MAC address, the source IP address, and the data etc., for example. In some embodiments, for example, the first leaf switch 406 may be the default gateway for the first host device 402.

In many more embodiments, at Step 5, the first leaf switch 406 may perform the lookup in the MAC address table, such as but not limited to the Ethernet MAC table or the CAM table. In some embodiments, if the host MAC address associated with the second host device 404 is not resolved, the Ethernet MAC table check may fail. The first leaf switch 406 may perform the LPM check to select the entry from the one or more routing or forwarding tables based on the destination IP address. The LPM check may utilize the predetermined prefix length to mask the one or more bits of the destination IP address. The LPM check can provide the entry from the routing or forwarding table that best matches the masked destination IP address. In some embodiments, for example, the LPM check can prefer the longest IP prefix or the most specific IP prefix that best matches with the destination IP address. Based on the result of the LPM check, the first leaf switch 406 can determine the system port of the second leaf switch 408 where the data packet is to be routed. The system port can be the next hop interface for transmitting the data packet to the second host device 404. The system port may be the in-band system port utilized for the iBGP session with the second leaf switch 408. In some embodiments, the data packet can be transmitted to the second leaf switch 408 by way of in-band communication.

In many additional embodiments, at Step 6, the first leaf switch 406 can encapsulate the data packet to generate the encapsulated data packet. The first leaf switch 406 may map the data packet or the encapsulated data packet to the VOQ. The first leaf switch 406 can transmit the grant request to the second leaf switch 408. The grant request may be indicative of requesting the second leaf switch 408 to provide credit to ensure that the OQs of the second leaf switch 408 have sufficient buffer space to store the data packet or the encapsulated data packet. If sufficient credit is granted by the second leaf switch 408, the data packet or the encapsulated data packet can be forwarded over the leaf-spine fabric to the corresponding OQs of the second leaf switch 408 at the system port identified by the next hop interface. In some embodiments, the transmission of the data packet to the second leaf switch 408 may be performed by the in-band communication session. In certain embodiments, the encapsulated data packet can be transmitted with the packet context data.

In many further embodiments, at Step 7, the second leaf switch 408 may transmit the ARP request to the second host device 404. The ARP request may be indicative of requesting the host MAC address of the second host device 404. In many further embodiments, at Step 8, the second host device 404 can transmit the ARP response to the second leaf switch 408. The ARP response may be indicative of the host MAC address of the second host device 404.

In still many embodiments, at Step 9, the second leaf switch 408 can decapsulate the encapsulated data packet and transmit the data packet to the second host device 404. The second leaf switch 408 may remove the packet context data from the encapsulated data packet. The second leaf switch 408 may further encapsulate the data packet with the destination address of the second host device 404. In some embodiments, the destination address can be the host MAC address associated with the second host device 404. In that, the second leaf switch 408 may add the Ethernet packet header indicative of the host MAC address of the second host device 404. The second host device 404 may receive the data packet from the second leaf switch 408.

In still further embodiments, at Step 10, the second leaf switch 408 can update the routing or forwarding tables to store the host MAC address. The second leaf switch 408 may also advertise the host MAC address to the first leaf switch 406. In that, the second leaf switch 408 can generate a second update message. The second update message may be indicative of the host IP address and the host MAC address. In some embodiments, for example, the second update message can be the BGP message or the iBGP message. In that, in certain embodiments, for example, the BGP message or the iBGP message may include the BGP update message or the iBGP update message. In certain embodiments, for example, the second update message can be the EVPN Route Type 2 message. The second leaf switch 408 may transmit the second update message based on one or more of: IPv4 address family, IPv6 address family, or EVPN address family etc. to the first leaf switch 406.

Although a specific embodiment for the network 400 for carrying out the various steps, processes, methods, and operations described herein is discussed with respect to FIG. 4, any of a variety of systems and/or processes may be utilized in accordance with embodiments of the disclosure. For example, the network 400 can route the data packet through the leaf-spine fabric or the DSF, resolve the host MAC address, advertise the host MAC address, and transmit the data traffic to one or more host devices by utilizing iBGP sessions between the plurality of network devices in the leaf-spine fabric or the DSF. The elements depicted in FIG. 4 may also be interchangeable with other elements of FIGS. 1 - 3 and FIGS. 5 - 9 as required to realize a particularly desired embodiment.

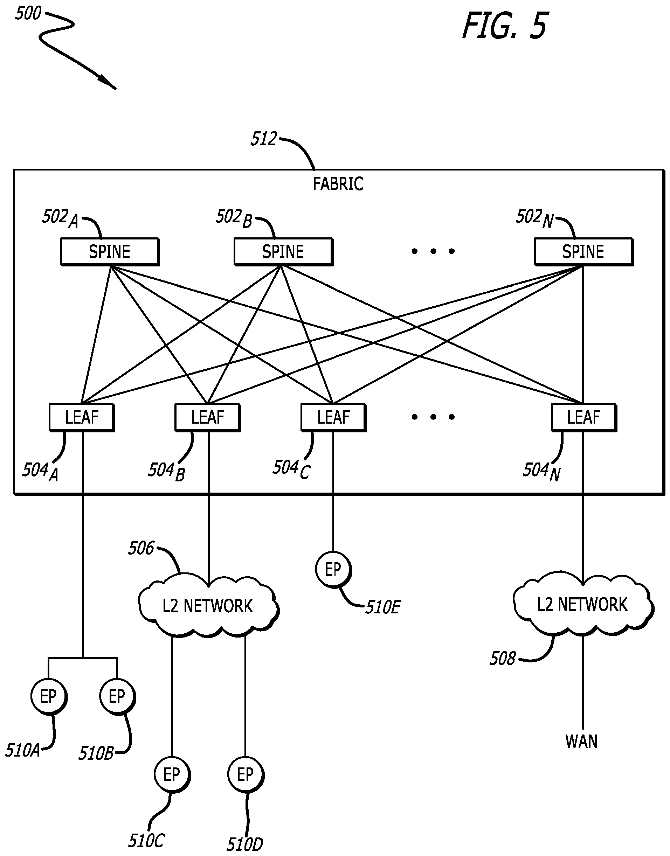

Referring now to FIG. 5, a schematic block diagram of an example architecture 500 for a network fabric 512, in accordance with various embodiments of the disclosure is shown. The network fabric 512 can include spine switches 502 _{A}, 502_{B}, ... , 502_{N} (collectively "402") connected to leaf switches 504 _{A}, 504 _{B}, 504 c ... 504 _{N} (collectively "504") in the network fabric 512. As those skilled in the art will recognize, networking fabric can refer to a high-speed, high-bandwidth interconnect system that enables multiple devices to communicate with each other efficiently and reliably. It is a network topology that is designed to provide a flexible and scalable infrastructure for data center, cloud environments, and other network elements.

Various embodiments described herein can include a leaf-spine architecture comprising a plurality of spine switches and leaf switches. Spine switches 502 can be L3 switches in the fabric 512. However, in some cases, the spine switches 502 can also, or otherwise, perform L2 functionalities. Further, the spine switches 502 can support various capabilities, such as, but not limited to, 40 or 10 Gbps Ethernet speeds. To this end, the spine switches 502 can be configured with one or more 40 Gigabit Ethernet ports. In certain embodiments, each port can also be split to support other speeds. For example, a 40 Gigabit Ethernet port can be split into four 10 Gigabit Ethernet ports, although a variety of other combinations are available.

In many embodiments, one or more of the spine switches 502 can be configured to host a proxy function that performs a lookup of the endpoint address identifier to locator mapping in a mapping database on behalf of leaf switches 504 that do not have such mapping. The proxy function can do this by parsing through the packet to the encapsulated tenant packet to get to the destination locator address of the tenant. The spine switches 502 can then perform a lookup of their local mapping database to determine the correct locator address of the packet and forward the packet to the locator address without changing certain fields in the header of the packet.

In various embodiments, when a packet is received at a spine switch 502*ᵢ* , wherein subscript "i" indicates that this operation may occur at any spine switch 502_{A} to 502_{N}, the spine switch 502; can first check if the destination locator address is a proxy address. If so, the spine switch 502; can perform the proxy function as previously mentioned. If not, the spine switch 502; can look up the locator in its forwarding table and forward the packet accordingly.

In a number of embodiments, one or more spine switches 502 can connect to one or more leaf switches 504 within the fabric 512. Leaf switches 504 can include access ports (or non-fabric ports) and fabric ports. Fabric ports can provide uplinks to the spine switches 502, while access ports can provide connectivity for devices, hosts, endpoints, VMs, or external networks to the fabric 512.

In more embodiments, leaf switches 504 can reside at the edge of the fabric 512, and can thus represent the physical network edge. In some cases, the leaf switches 504 can be top-of-rack ("ToR") switches configured according to a ToR architecture. In other cases, the leaf switches 504 can be aggregation switches in any particular topology, such as end-of-row (EoR) or middle-of-row (MoR) topologies. The leaf switches 504 can also represent aggregation switches, for example.

In additional embodiments, the leaf switches 504 can be responsible for routing and/or bridging various packets and applying network policies. In some cases, a leaf switch can perform one or more additional functions, such as implementing a mapping cache, sending packets to the proxy function when there is a miss in the cache, encapsulate packets, enforce ingress or egress policies, etc. Moreover, the leaf switches 504 can contain virtual switching functionalities, such as a virtual tunnel endpoint (VTEP) function. To this end, leaf switches 504 can connect the fabric 512 to an overlay network.

In further embodiments, network connectivity in the fabric 512 can flow through the leaf switches 504. Here, the leaf switches 504 can provide servers, resources, endpoints, external networks, or VMs access to the fabric 512, and can connect the leaf switches 504 to each other. In some cases, the leaf switches 504 can connect endpoint groups to the fabric 512 and/or any external networks. Each endpoint group can connect to the fabric 512 via one of the leaf switches 504, for example.

Endpoints 510 A - E (collectively "510", shown as "EP") can connect to the fabric 512 via leaf switches 504. For example, endpoints 510A and 510B can connect directly to leaf switch 504A, which can connect endpoints 510A and 510B to the fabric 512 and/or any other one of the leaf switches 504. Similarly, endpoint 510E can connect directly to leaf switch 504C, which can connect endpoint 510E to the fabric 512 and/or any other of the leaf switches 504. On the other hand, endpoints 510C and 510D can connect to leaf switch 504B via L2 network 506. Similarly, the wide area network (WAN) can connect to the leaf switches 504C or 504D via L3 network 508.

In certain embodiments, endpoints 510 can include any communication device, such as a computer, a server, a switch, a router, etc. In some cases, the endpoints 510 can include a server, hypervisor, or switch configured with a VTEP functionality which connects an overlay network, with the fabric 512. The overlay network can host physical devices, such as servers, applications, endpoint groups, virtual segments, virtual workloads, etc. In addition, the endpoints 510 can host virtual workload(s), clusters, and applications or services, which can connect with the fabric 512 or any other device or network, including an external network. For example, one or more endpoints 510 can host, or connect to, a cluster of load balancers or an endpoint group of various applications.

Although a specific embodiment for an architecture 500 is described above with respect to FIG. 5, any of a variety of systems and/or processes may be utilized in accordance with embodiments of the disclosure. For example, the architecture 500 could comprise any variety of endpoints, spine switches, and/or leaf switches. The elements depicted in FIG. 5 may also be interchangeable with other elements of FIGS. 1 - 4 and 6 - 9 as required to realize a particularly desired embodiment.

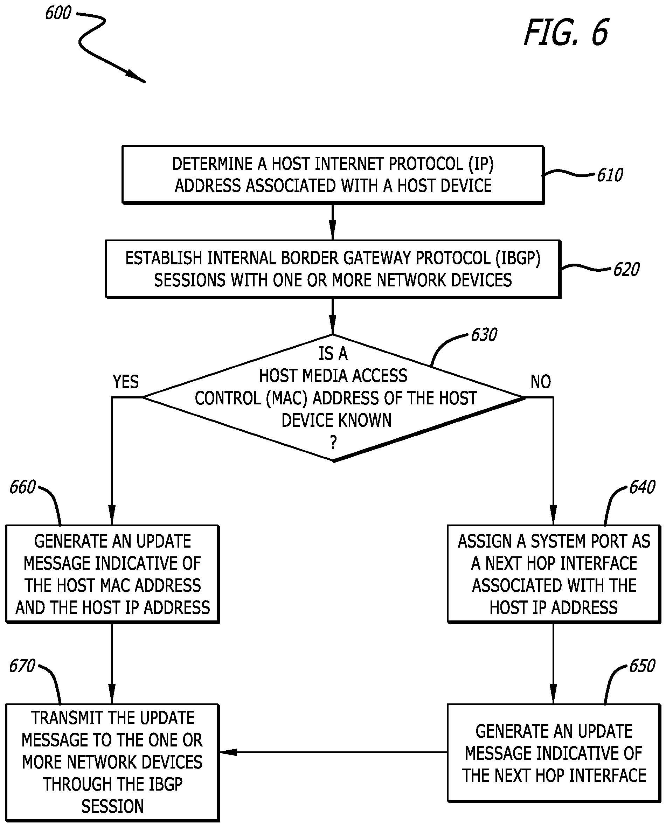

Referring now to FIG. 6, a flowchart depicting a process 600 for distributing the next hop interface associated with the host device, in accordance with various embodiments of the disclosure is shown. In many embodiments, the process 600 can determine the host IP address associated with the host device (block 610). In some embodiments, the process 600 can be implemented by one or more network devices, such as but not limited to leaf switches or TOR switches in the leaf-spine fabric or the DSF. In certain embodiments, the host device can be the remote host device, the silent host device, or the host device in the remote subnet etc. for example.

In a number of embodiments, the process 600 may establish the iBGP session with the one or more network devices (block 620). In some embodiments, the process 600 can be connected to the one or more network devices in full mesh topology in the leaf-spine fabric or the DSF. In certain embodiments, the process 600 can establish the iBGP session through the system port. In more embodiments, the system port can be the in-band system port utilized for the in-band communication with the one or more network devices. In some more embodiments, the iBGP session can be the in-band communication session with the one or more network devices in the DSF.

In various embodiments, the process 600 can check if the host MAC address of the host device is known (block 630). In some embodiments, the process 600 may check for the host MAC address in the Ethernet MAC table or the CAM table. In certain embodiments, the process 600 can check for the host MAC address in the routing or forwarding table. In more embodiments, the host device can be the remote host device or the silent host device for which the MAC address is not resolved. In some more embodiments, the host device can be in the remote subnet for which the MAC addresses are not resolved.

If at block 630 the process 600 determines that the host MAC address of the host device is not known, in additional embodiments, the process 600 may assign the system port as the next hop interface associated with the host IP address (block 640). In some embodiments, the data traffic destined for the host device may be transmitted to the next hop interface until the host MAC address is resolved, thereby avoiding data loss or flooding. In certain embodiments, the process 600 can receive the data traffic destined for the host device through the system port by way of the in-band communication. In more embodiments, for example, the data traffic destined for the host device that is received by the process 600 can be punted to the control plane or the processor/controller of the network device implementing the process 600. In some more embodiments, for example, the process 600 can resolve the host MAC address of the host device upon receiving the data traffic destined for the host device.

In further embodiments, the process 600 can generate the update message indicative of the next hop interface (block 650). In some embodiments, the update message can be the iBGP update message. In certain embodiments, the update message can be the EVPN Route Type 5 message. In more embodiments, the EVPN Route Type 5 message can facilitate IP prefix advertisements, floating IP addresses, external IP prefix advertisements, or can withdraw previously advertised IP prefixes etc. for example. In some more embodiments, the EVPN Route Type 5 message may be transmitted without the host MAC address associated with the host device.

If at block 630 the process 600 determines that the host MAC address of the host device is known, in many more embodiments, the process 600 may generate the update message indicative of the host IP address and the host MAC address (block 660). In some embodiments, the update message can be the iBGP update message. In certain embodiments, the update message can be the EVPN Route Type 2 message for advertising the host MAC address and the host IP address.

In many further embodiments, the process 600 can transmit the update message to the one or more network devices through the iBGP session (block 670). In some embodiments, the process 600 may transmit the update message to the network devices in one or more iBGP sessions. In certain embodiments, for example, the process 600 may transmit the update message based on one or more of: IPv4 address family, IPv6 address family, or EVPN address family etc. In more embodiments, the network devices can receive the update message and can update the corresponding routing or forwarding tables based on the update message.

Although a specific embodiment for the process 600 for distributing the next hop interface associated with the host device for carrying out the various steps, processes, methods, and operations described herein is discussed with respect to FIG. 6, any of a variety of systems and/or processes may be utilized in accordance with embodiments of the disclosure. For example, the process 600 may utilize one or more different types of messages or signals to advertise the host routes, host addresses, or next hop interfaces, either: dynamically and/or periodically. The elements depicted in FIG. 6 may also be interchangeable with other elements of FIGS. 1 - 5 and FIGS. 7 - 9 as required to realize a particularly desired embodiment.

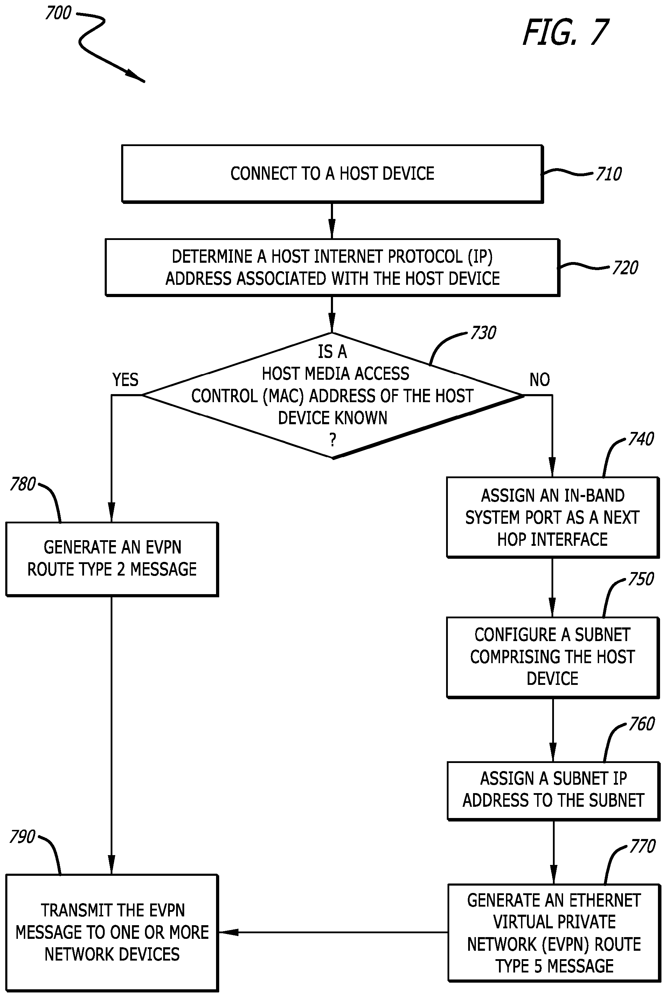

Referring now to FIG. 7, a flowchart depicting a process 700 for distributing subnet information, in accordance with various embodiments of the disclosure is shown. In many embodiments, the process 700 can connect to the host device (block 710). In some embodiments, the process 700 may be implemented by the one or more network devices such as the leaf switches or the TOR switches in the leaf-spine fabric of the DSF. In certain embodiments, the leaf switch implementing the process 700 may be in communication with the host device. In that, in more embodiments, leaf switch implementing the process 700 can be directly or indirectly connected to the host device by way of one or more types of routes, such as but not limited to static routes, dynamic routes, or directly connected routes, etc. for example. In some more embodiments, in the directly connected routes, the host device can be in the subnet directly connected to the active interface of the leaf switch. In numerous embodiments, the directly connected routes may be automatically detected and recorded by the process 700 when the leaf switch is configured and/or is operational. In still many embodiments, in static routes, the route for the host device may be configured in the leaf switch by the operator. In still further embodiments, for example, the operator may configure, on the leaf switch, a static route for the host device such that data traffic destined for the host device may be forwarded through a specific next hop network device, such as but not limited to a router, for example. In many further embodiments, in dynamic routes, the leaf switch can utilize one or more routing protocols to determine the route for the host device. Examples of the routing protocols may include, but are not limited to, Open Shortest Path First (OSPF), BGP, or Routing Information Protocol (RIP) etc.

In additional embodiments, the process 700 can determine the host IP address associated with the host device (block 720). In some embodiments, the process 700 may utilize one or more protocols such as but not limited to Simple Network Management Protocol (SNMP) or Secure Shell (SSH) etc. to determine the host IP address, or monitor / manage the host device. In certain embodiments, the process 700 can utilize Layer 2 Link Layer Discovery Protocol (LLDP) to discover the one or more network devices and/or host devices and advertise identities of the one or more network devices and/or host devices.

In a number of embodiments, the process 700 may check if the host MAC address of the host device is known (block 730). In some embodiments, the process 700 may check for the host MAC address in the Ethernet MAC table or the CAM table. In certain embodiments, the process 700 can check for the host MAC address in the routing or forwarding table. In more embodiments, the host device can be the remote host device or the silent host device for which the MAC address is not resolved. In some more embodiments, the host device can be in the remote subnet for which the MAC addresses are not resolved.

If at block 730 the process 700 determines that the host MAC address of the host device is not known, in various embodiments, the process 700 may assign the system port as the next hop interface associated with the host IP address (block 740). In some embodiments, the data traffic destined for the host device may be transmitted to the next hop interface until the host MAC address is resolved, thereby avoiding data loss or flooding. In certain embodiments, the process 700 can receive the data traffic destined for the host device through the system port by way of the in-band communication. In more embodiments, for example, the data traffic destined for the host device that is received by the process 700 can be punted to the control plane or the processor/controller of the leaf switch implementing the process 700. In some more embodiments, for example, the process 700 can resolve the host MAC address of the host device upon receiving the data traffic destined for the host device.

In additional embodiments, the process 700 can configure the subnet comprising the host device (block 750). In some embodiments, the host device can be in the subnet for which the MAC addresses are not known. In more embodiments, the subnet can be the remote subnet comprising the host device. In certain embodiments, the process 700 can configure one or more Link Aggregation Groups (LAGs) or Virtual Local Area Networks (VLANs) etc. for example.

In further embodiments, the process 700 may assign the subnet IP address to the subnet (block 760). In some embodiments, the process 700 can determine one or more IP prefixes associated with the subnet. In certain embodiments, the process 700 may determine a mask or a prefix length for the subnet. In more embodiments, the process 700 can acquire one or more IP addresses from a Dynamic Host Configuration Protocol (DHCP) server. In some more embodiments, the process 700 may utilize one or more default IP addresses or one or more predetermined IP addresses.

In many more embodiments, the process 700 can generate the EVPN Route Type 5 message (block 770). In some embodiments, the EVPN Route Type 5 message can facilitate IP prefix advertisements, floating IP addresses, external IP prefix advertisements, or can withdraw previously advertised IP prefixes etc. for example. In certain embodiments, the EVPN Route Type 5 message may be transmitted without the host MAC address associated with the host device. In more embodiments, the EVPN Route Type 5 message can be utilized when the host MAC address is not known or not resolved.

If at block 730 the process 700 determines that the host MAC address of the host device is known, in many additional embodiments, the process 700 may generate the EVPN Route Type 2 message (block 780). In some embodiments, the EVPN Route Type 2 message can be utilized to advertise the host MAC address and the host IP address of the host device when the host MAC address is known or resolved. In more embodiments, the process 700 can resolve the host MAC address if the process 700 receives the data traffic destined for the host traffic through the in-band system port.

In many further embodiments, the process 700 can transmit the EVPN message to the one or more network devices (block 790). In some embodiments, the process 700 may transmit the EVPN message based on the EVPN address family. In certain embodiments, the network devices can receive the EVPN message and update the corresponding routing or forwarding tables based on one or more of: the host IP address, the host MAC address, the subnet IP address, or the system port.

Although a specific embodiment for the process 700 for distributing the subnet information for carrying out the various steps, processes, methods, and operations described herein is discussed with respect to FIG. 7, any of a variety of systems and/or processes may be utilized in accordance with embodiments of the disclosure. For example, the process 700 may utilize the EVPN Route Type 5 message to distribute the subnet information when the host MAC address is not known or is unresolved. The elements depicted in FIG. 7 may also be interchangeable with other elements of FIGS. 1 - 6 and FIGS. 8 - 9 as required to realize a particularly desired embodiment.

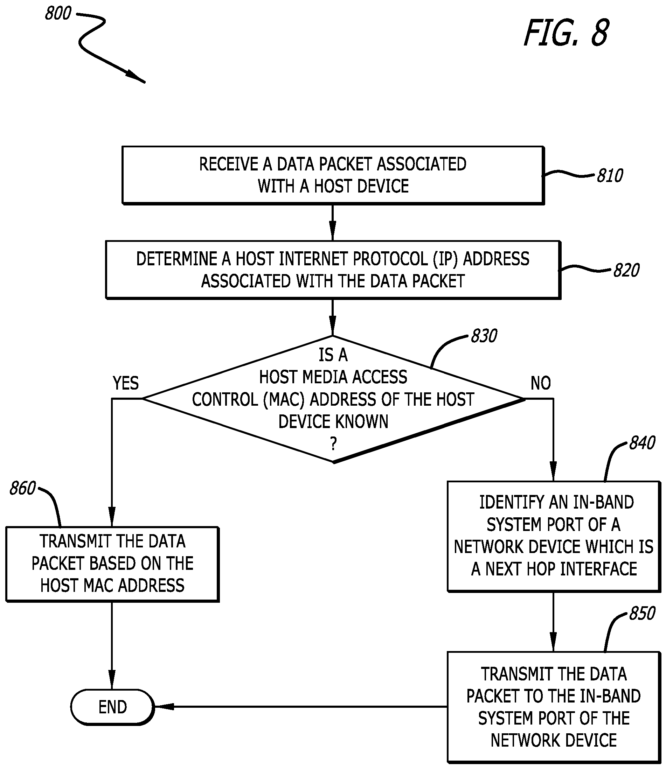

Referring now to FIG. 8, a flowchart depicting a process 800 for routing the data packet, in accordance with various embodiments of the disclosure is shown. In many embodiments, the process 800 can receive the data packet associated with the host device (block 810). In some embodiments, the process 800 may be implemented by one or more leaf switches, *i.e.,* TOR switches in the leaf-spine fabric or the DSF. In certain embodiments, the data packet may include the destination MAC address, the destination IP address, the source MAC address, the source IP address, and the data etc., for example.

In a number of embodiments, the process 800 may determine the destination IP address indicated by the data packet (block 820). In some embodiments, the destination IP address can be indicative of the remote host device. In more embodiments, the destination IP address may be indicative of the remote subnet comprising the remote host device.

In various embodiments, the process 800 can check if the host MAC address is known (block 830). In some embodiments, for example, the host MAC address may be unknown or unresolved if the host device is the remote or silent. In certain embodiments, for example, the host MAC address can be unknown or unresolved if the host device is connected to the remote subnet.

If at block 830 the process 800 determines that the host MAC address of the host device is not known, in various embodiments, the process 800 may identify the in-band system port of the network device which is the next hop interface (block 840). In some embodiments, the network device can be the leaf switch connected to the remote host device. In certain embodiments, the in-band system port can be system port of the leaf switch utilized for the iBGP session.

In additional embodiments, the process 800 can transmit the data packet to the in-band system port of the network device (block 850). In some embodiments, the process 800 may generate and transmit the encapsulated data packet and the packet context data. In certain embodiments, the process 800 can utilize the VOQ and the grant request to transmit the data packet and/or the encapsulated data packet to the network device. In more embodiments, the process 800 may transmit the data packet through the control plane.

If at block 830 the process 800 determines that the host MAC address of the host device is known, in various embodiments, the process 800 may route the data packet to the host device based on the host MAC address (block 860). In some embodiments, process 800 can determine the host MAC address based on the Ethernet MAC table or the CAM table, or the routing or forwarding tables. In certain embodiments, the leaf switch may forward the data packet to the host device through the data plane.

Although a specific embodiment for the process 800 for routing the data packet for carrying out the various steps, processes, methods, and operations described herein is discussed with respect to FIG. 8, any of a variety of systems and/or processes may be utilized in accordance with embodiments of the disclosure. For example, the process 800 may route the data packet through the control plane when the host MAC address is unresolved. The elements depicted in FIG. 8 may also be interchangeable with other elements of FIGS. 1 - 7 and FIG. 9 as required to realize a particularly desired embodiment.

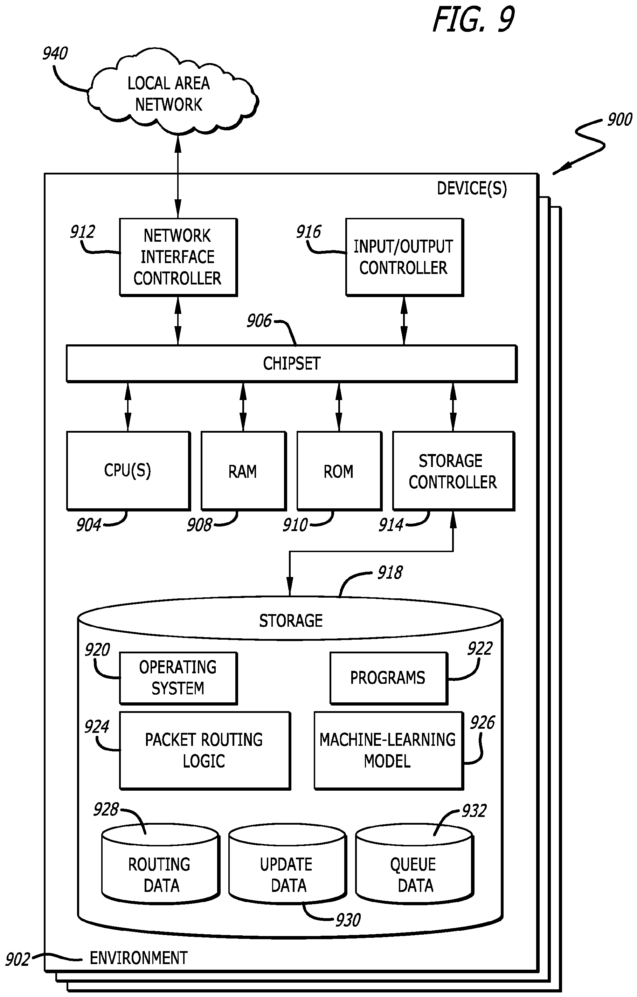

Referring to FIG. 9, a conceptual block diagram of a device 900 suitable for configuration with a packet routing logic, in accordance with various embodiments of the disclosure is shown. The embodiment of the conceptual block diagram depicted in FIG. 9 can illustrate a conventional server, computer, workstation, desktop computer, laptop, tablet, network appliance, e-reader, smartphone, or other computing device, and can be utilized to execute any of the application and/or logic components presented herein. The embodiment of the conceptual block diagram depicted in FIG. 9 can also illustrate an access point, a switch, or a router in accordance with various embodiments of the disclosure. The device 900 may, in many nonlimiting examples, correspond to physical devices or to virtual resources described herein.

In many embodiments, the device 900 may include an environment 902 such as a baseboard or "motherboard," in physical embodiments that can be configured as a printed circuit board with a multitude of components or devices connected by way of a system bus or other electrical communication paths. Conceptually, in virtualized embodiments, the environment 902 may be a virtual environment that encompasses and executes the remaining components and resources of the device 900. In more embodiments, one or more processors 904, such as, but not limited to, central processing units ("CPUs") can be configured to operate in conjunction with a chipset 906. The processor(s) 904 can be standard programmable CPUs that perform arithmetic and logical operations necessary for the operation of the device 900.

In a number of embodiments, the processor(s) 904 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 906 may provide an interface between the processor(s) 904 and the remainder of the components and devices within the environment 902. The chipset 906 can provide an interface to a random-access memory ("RAM") 908, which can be used as the main memory in the device 900 in some embodiments. The chipset 906 can further be configured to provide an interface to a computer-readable storage medium such as a read-only memory ("ROM") 910 or non-volatile RAM ("NVRAM") for storing basic routines that can help with various tasks such as, but not limited to, starting up the device 900 and/or transferring information between the various components and devices. The ROM 910 or NVRAM can also store other application components necessary for the operation of the device 900 in accordance with various embodiments described herein.

Additional embodiments of the device 900 can be configured to operate in a networked environment using logical connections to remote computing devices and computer systems through a network, such as the network 940. The chipset 906 can include functionality for providing network connectivity through a network interface card ("NIC") 912, which may comprise a gigabit Ethernet adapter or similar component. The NIC 912 can be capable of connecting the device 900 to other devices over the network 940. It is contemplated that multiple NICs 912 may be present in the device 900, connecting the device to other types of networks and remote systems.

In further embodiments, the device 900 can be connected to a storage 918 that provides non-volatile storage for data accessible by the device 900. The storage 918 can, for instance, store an operating system 920, applications 922, routing data 928, update data 930, and queue data 932 which are described in greater detail below. The storage 918 can be connected to the environment 902 through a storage controller 914 connected to the chipset 906. In certain embodiments, the storage 918 can consist of one or more physical storage units. The storage controller 914 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units. The routing data 928 can store one or more of: the routing or forwarding tables, Ethernet MAC table, CAM table, the update messages including the BGP update messages and the iBGP update messages, the IP and MAC addresses, interface information, subnet information, or the next hop information etc., for example. The update data 930 can store one or more of: the BGP and iBGP messages or the EVPN messages including the EVPN Route Type 2 message or the EVPN Route Type 5 message etc., for example. The queue data 932 may store the VOQs, the encapsulated data packets, the packet context data, or the data traffic etc., for example.

The device 900 can store data within the storage 918 by transforming the physical state of the physical storage units to reflect the information being stored. The specific transformation of physical state can depend on various factors. Examples of such factors can include, but are not limited to, the technology used to implement the physical storage units, whether the storage 918 is characterized as primary or secondary storage, and the like.

In many more embodiments, the device 900 can store information within the storage 918 by issuing instructions through the storage controller 914 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 900 can further read or access information from the storage 918 by detecting the physical states or characteristics of one or more particular locations within the physical storage units.

In addition to the storage 918 described above, the device 900 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 900. In some examples, the operations performed by a cloud computing network, and or any components included therein, may be supported by one or more devices similar to device 900. Stated otherwise, some or all of the operations performed by the cloud computing network, and or any components included therein, may be performed by one or more devices 900 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 918 can store an operating system 920 utilized to control the operation of the device 900. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 918 can store other system or application programs and data utilized by the device 900.

In many additional embodiments, the storage 918 or other computer-readable storage media is encoded with computer-executable instructions which, when loaded into the device 900, may transform it from a general-purpose computing system into a special-purpose computer capable of implementing the embodiments described herein. These computer-executable instructions may be stored as application 922 and transform the device 900 by specifying how the processor(s) 904 can transition between states, as described above. In some embodiments, the device 900 has access to computer-readable storage media storing computer-executable instructions which, when executed by the device 900, perform the various processes described above with regard to FIGS. 1 - 8. In certain embodiments, the device 900 can also include computer-readable storage media having instructions stored thereupon for performing any of the other computer-implemented operations described herein.

In many further embodiments, the device 900 may include a packet routing logic 924. The packet routing logic 924 can be configured to perform one or more of the various steps, processes, operations, and/or other methods that are described above. Often, the packet routing logic 924 can be a set of instructions stored within a non-volatile memory that, when executed by the processor(s)/controller(s) 904 can carry out these steps, etc. In some embodiments, the packet routing logic 924 may be a client application that resides on a network-connected device, such as, but not limited to, a server, switch, personal or mobile computing device in a single or distributed arrangement. The packet routing logic 924 may route the data packets over the leaf-spine fabric such as but not limited to the DSF.

In still further embodiments, the device 900 can also include one or more input/output controllers 916 for receiving and processing input from a number of input devices, such as a keyboard, a mouse, a touchpad, a touch screen, an electronic stylus, or other type of input device. Similarly, an input/output controller 916 can be configured to provide output to a display, such as a computer monitor, a flat panel display, a digital projector, a printer, or other type of output device. Those skilled in the art will recognize that the device 900 might not include all of the components shown in FIG. 9 and can include other components that are not explicitly shown in FIG. 9 or might utilize an architecture completely different than that shown in FIG. 9.

As described above, the device 900 may support a virtualization layer, such as one or more virtual resources executing on the device 900. In some examples, the virtualization layer may be supported by a hypervisor that provides one or more virtual machines running on the device 900 to perform functions described herein. The virtualization layer may generally support a virtual resource that performs at least a portion of the techniques described herein.

Finally, in numerous additional embodiments, data may be processed into a format usable by a machine-learning model 926 (e.g., feature vectors), and or other pre-processing techniques. The machine-learning ("MI,") model 926 may be any type of ML model, such as supervised models, reinforcement models, and/or unsupervised models. The ML model 926 may include one or more of linear regression models, logistic regression models, decision trees, Naïve Bayes models, neural networks, k-means cluster models, random forest models, and/or other types of ML models 926.

The ML model(s) 926 can be configured to generate inferences to make predictions or draw conclusions from data. An inference can be considered the output of a process of applying a model to new data. This can occur by learning from at least the routing data 928, the update data 930, and the queue data 932 and use that learning to predict future outcomes. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a probability distribution, a set of labels, a decision about an action to take, etc. Ground truth for the ML model(s) 926 may be generated by human/administrator verifications or may compare predicted outcomes with actual outcomes.

Although a specific embodiment for the device 900 suitable for configuration with the packet routing logic for carrying out the various steps, processes, methods, and operations described herein is discussed with respect to FIG. 9, any of a variety of systems and/or processes may be utilized in accordance with embodiments of the disclosure. For example, the device 900 may be in a virtual environment such as a cloud-based network administration suite, or it may be distributed across a variety of network devices or switches. The elements depicted in FIG. 9 may also be interchangeable with other elements of FIGS. 1 - 8 as required to realize a particularly desired embodiment.

In summary, devices, networks, systems, methods, and processes for packet forwarding and routing are described herein. A leaf switch can be in communication with a host device. The leaf switch may configure a subnet comprising the host device. The leaf switch can assign a next hop interface as a system port of the leaf switch and generate subnet information indicative of the assignment. The leaf switch may distribute the subnet information to one or more network devices through one or more internal Border Gateway Protocol sessions. A data packet destined to the host device can be transmitted to the system port of the leaf switch when a host Media Access Control (MAC) address of the host device is not resolved. The leaf switch can resolve the host MAC address and transmit the data packet to the host device based on the host MAC address.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A method comprising:
determining a host Internet Protocol (IP) address associated with a host device;
establishing a communication session with one or more network devices;
generating a first update message based on the host IP address; and
transmitting the first update message to the one or more network devices.

2. The method of claim 1, wherein generating the first update message comprises:
assigning a system port as a next hop interface associated with the host IP address; and
generating, based on assignment of the system port, the first update message indicative of the next hop interface.

3. The method of claim 2, wherein the system port is an in-band system port in communication with the one or more network devices through a disaggregated scheduled fabric.

4. The method of claim 2 or 3, further comprising:
receive, through the system port, a data packet associated with the host device;
resolve a host Media Access Control (MAC) address associated with the host device; and
transmit the data packet to the host device based on the host MAC address;
optionally wherein resolving the host MAC address comprises:
transmitting an Address Resolution Protocol (ARP) request to the host device; and
receiving, from the host device, an ARP response indicative of the host MAC address.

5. The method of claim 4, further comprising:
generating a second update message based on the host MAC address; and
transmitting the second update message to the one or more network devices.

6. The method of any of claims 1 to 5, further comprising:
configuring a subnet comprising the host device; and
assigning a subnet IP address to the subnet;
optionally wherein the communication session is an internal Border Gateway Protocol (iBGP) session and the first update message and the second update message are iBGP update messages.

7. The method of claim 6, wherein the first update message is an Ethernet Virtual Private Network (EVPN) Route Type 5 message indicative of one or more of: the subnet IP address or the host IP address; optionally wherein the second update message is an EVPN Route Type 2 message indicative of one or more of: the host MAC address or the host IP address.

8. The method of claim 6 or 7, further comprising:
storing at least one routing or forwarding table in the memory; and
updating the at least one routing or forwarding table based on one or more of: the host IP address, the host MAC address, the subnet IP address, or the system port.

9. A method comprising:
receiving a first update message from a network device;
determining, based on the first update message, a next hop interface and an Internet Protocol (IP) address associated with a host device;
receiving a data packet associated with the host device;
identifying an in-band system port of the network device indicated by the next hop interface; and
transmitting the data packet to the in-band system port of the network device.

10. The method of claim 9, wherein the IP address is indicative of one or more of:
a host IP address associated with the host device, or
a subnet IP address associated with a subnet comprising the host device.

11. The method of claim 9 or 10, further comprising:
receiving a second update message from the network device; and
determining, based on the second update message, a host Media Access Control (MAC) address associated with the host device.

12. The method of any of claims 9 to 11, wherein the first update message is an Ethernet Virtual Private Network (EVPN) Route Type 5 message indicative of one or more of: the subnet IP address or the host IP address;
optionally wherein the second update message is an EVPN Route Type 2 message indicative of one or more of: the host MAC address or the host IP address.

13. The method of claim 11 or 12, further comprising:
storing at least one routing or forwarding table in the memory; and
updating the at least one routing or forwarding table based on one or more of: the host IP address, the host MAC address, the subnet IP address, or the in-band system port.

14. A method, comprising:
determining a host Internet Protocol (IP) address associated with a host device;
assigning an in-band system port as a next hop interface associated with the host IP address;
generating a first update message indicative of the host IP address and the next hop interface; and
transmitting the first update message to one or more network devices.

15. The method of claim 14, further comprising:
receiving, through the in-band system port, a data packet associated with the host device from the one or more network devices;
transmitting an Address Resolution Protocol (ARP) request to the host device;
receiving, from the host device, an ARP response indicative of a host Media Access Control (MAC) address; and
transmitting the data packet to the host device based on the host MAC address;
the method optionally further comprising:
generating a second update message indicative of the host MAC address and the host IP address; and
transmitting the second update message to the one or more network devices.

16. Apparatus comprising means for implementing the method according to any of claims 1 to 15.

17. A computer program, computer program product or computer readable medium comprising instructions which, when executed by a computer, cause the computer to carry out the steps of the method of any of claims 1 to 15.
